# EUROPEAN PATENT SPECIFICATION

(11) **EP 3 034 032 B1**
(45) Date of publication and mention of the grant of the patent: **01.08.2018**
(21) Application number: 13891578.0
(22) Date of filing: 14.08.2013
(51) Int. Cl.: A61C 8/00, A61C 13/225

(54) **DENTAL PROSTHESIS SECURING DEVICE**
ZAHNPROTHESENSICHERUNGSVORRICHTUNG
DISPOSITIF DE FIXATION DE PROTHÈSES DENTAIRES

(43) Date of publication of application: 22.06.2016
(73) Proprietor: Toboso Ramón, Jesús, 03300 Orihuela (Alicante) (ES)
(72) Inventor: Toboso Ramón, Jesús, 03300 Orihuela (Alicante) (ES)
(74) Representative: Pons
(86) International application number: PCT/ES2013/070601
(87) International publication number: WO 2015/022441

(56) References cited:
- EP-A1- 0 515 937
- EP-A1- 2 168 531
- DE-A1- 3 904 237
- ES-U- 1 076 359
- US-A- 3 732 621
- US-A- 5 116 225
- US-A- 5 759 036
- US-A- 5 975 902

## Description

### OBJECT OF THE INVENTION

The present invention is included in the field of dentistry and, more specifically, in that of dental prosthesis.

The object of the invention consists of dental prosthesis systems which allow the insertion of pieces reversibly and simply. Additionally, this system allows the correction of misalignments between implants.

### BACKGROUND OF THE INVENTION

Dental implants are a solution known world today for people who have lost teeth or who require the use of implants due to different problems.

The success of prosthetic rehabilitation on the dental implant lies in the choice, and correct execution, of the suitable treatment plan, using the existing resources.

Until now, in dentistry there have been two systems of prosthesis: fixed prosthesis (cemented and screwed) and removable prosthesis.

The advantages of screwed prosthesis include reversibility. However, there are disadvantages such as the chimneys whose location in the dental prosthesis sometimes generates aesthetic problems, fractures of prosthetic fragments and poorer aesthetics.

The advantages of cemented prosthesis are better occlusion and better aesthetics as they do not have chimneys. There is also a better passive adjustment and it is less demanding on the precision of prosthesis production. However, there is the drawback that it is an irreversible prosthesis and, furthermore, when the cement is not correctly removed it may be housed infra-gingivally and produce adverse reactions.

A solution is necessary which provides the advantages of cemented prosthesis without renouncing the reversibility of screwed prosthesis, eliminating cements and chimneys; and which, in turn, enable compensating for misalignments between implants with great precision and passive adjustment of the prosthetic structures, prepared both with CAD CAM technologies, and by traditional processes of millables and castables.

Documents DE3904237 and ES1076359 disclose dental prosthesis securing devices according to the preamble of claim 1.

### DESCRIPTION OF THE INVENTION

The invention is defined by the claims. The device object of the invention has the object of resolving the aforementioned problems by means of a dental prosthesis fixing device principally formed by two parts:
- an interface piece, preferably single-piece, which has an outer thread in at least part of a lower section defined from a flat base which comprises a polygonal rib whereon a male connector defined by revolution volume is defined.
- a connection piece, adapted to be fixed inside the dental prosthesis and to be fixed to the interface piece by means of a female connector defined by a hollow interior case with a form which essentially coincides with that of the revolution volume of the male connector of the interface piece.

The interface piece of the dental prosthesis fixing device is preferably performed by means of high-precision machining to obtain a solid body wherein the elements of the actual interface piece are defined. Said interface piece is devised to be connected to the fixed element in the mouth, whether a dental implant or dental root. To perform this connection, the interface has a form compatible with the geometry of said fixed element which is located in the mouth to make use of the dental prosthesis fixing device fixing device object of the invention, it being possible in possible embodiments to change the metric of the screw threading, the actual screw geometry or the cylindrical or conical element where it is designed to rest and adjust the piece.

The interface piece is formed by:
- A revolution volume which will act as retention element.
- A rib with polygonal form which will allow the threading of this element on the dental implant or root.
- A flat support base whereon the connection piece presented in the present invention will be adjusted and rest.

The connection piece of the dental prosthesis fixing device is formed by:
- One or several elements which take on a different form or nature depending on the prosthetic solution desired and reversible or irreversibly joined to the interface piece of the dental prosthesis fixing device. In a possible embodiment of the object of the invention the connection piece may form part of the dental prosthesis being inserted or embedded therein.

The fastening between the interface piece and the connection piece of the fixing device described here is performed by means of pressure after presentation of the retention element of the first with the case of the second. The adjustment between the two pieces must be high-precision, not allowing the entry of remains of food nor residues, so that the geometry of both pieces is defined so that the adjustment is perfect bearing in mind the possible tolerances and machinings.

Once the hygiene is controlled inside the fixing device and designing the encounter of the two parts of the device it can be considered that the joint generated is a fixed prosthesis, not being necessary to remove it from the mouth to clean daily. The design of the dental prosthesis as a whole must adjust to the classic of fixed prosthesis with encounters with the gum with preferably inclined planes and forms which allow traditional maintenance.

In a possible embodiment of the device object of the invention, the two main pieces (interface and connection), may be formed by several pieces to adapt to the dimensions of available space according to the dental pieces to replace, the amount of retentions intended, the biomechanical distribution of the clinical case in particular, etc. without forgetting that the device will finally be part of a dental prosthesis specifically tailor-made to cover the requirements of a specific patient.

The efficacy of the dental prosthesis fixing device shall depend on the suitable choice of the different pieces. It will be possible to choose the nature, size and geometry of the dental prosthesis fixing device depending on the characteristics and needs to satisfy.

The wear of the retention element and its loss of efficacy is improbable since it is a fixed device enclosed in the capsule and which does not have to be frequently removed and the supporting load of chewing lies in the metal support circle through the prosthetic structures. Likewise, as there are no chimneys, possible weak points of fracture are avoided, having a very effective prosthetic retention without cements which can be introduced in undesirable places.

The object of the invention described here is complemented with a series of auxiliary elements to cover all the typical production procedures of dental prostheses, from the most modern CAD CAM systems, to more basic processes with castables.

### DESCRIPTION OF THE DRAWINGS

To complement the description being made, and in order to aid towards a better understanding of the characteristics of the invention, in accordance with a preferred example of practical embodiment thereof, a set of drawings is attached as an integral part of said description, wherein the following has been represented with an illustrative and non-limiting character:
Figures 1a-1d.- Show views of a preferred embodiment of the interface piece of the device object of the invention showing respectively: a) a perspective view, b) an elevational view, c) a sectional view and d) plan view.
Figure 2a-2c.- Show views of a preferred embodiment of a detail of the top part of the interface piece of the device object of the invention respectively showing: a) a plan view, b) an elevational view, c) a sectional view and d) plan view.
Figures 3a-3c.- Show views of a preferred embodiment of the case of the retainer of the connection piece of the device object of the invention respectively showing: a) a top perspective view, b) a bottom perspective view, c) an elevational view and d) sectional view.
Figures 4a-4d.- Show views of an alternative embodiment of the case of the retainer of the connection piece of the device object of the invention respectively showing: a) a bottom perspective view, b) a top perspective view, c) an elevational view and d) sectional view.
Figures 5a-5c.- Show views of a preferred embodiment of retainer of the connection piece of the device object of the invention respectively showing: a) a perspective view b) an elevational view and c) sectional view.
Figures 6a-6c.- Show views of an alternative embodiment of the interface piece of the device object of the invention respectively showing: a) a perspective view, b) an elevational view and c) a sectional view.
Figure 7.- Shows a sectional view of the device object of the invention showing all the elements that form it.

### PREFERRED EMBODIMENT OF THE INVENTION

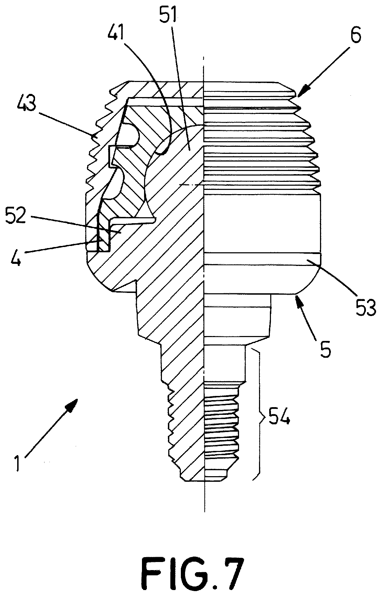

In a preferred embodiment of dental prosthesis (2) fixing device (1) object of the invention shown in figure 7 a retention one is shown based on a friction between a revolution solid [preferably solid and in said preferred embodiment defined by a sphere] and a retainer (4) encapsulated in the prosthesis (2).

In this example of preferred embodiment of the device (1), wherein the prosthesis (2) comprises the retainer (4) encapsulated therein, the fixing is performed between a connector which defines an interface piece (5) with a revolution solid for example a sphere which may be solid or hollow and may define mechanical and fixing properties by means of combinations of thicknesses, fillings and different types of materials or reinforcements; and the retainer (4) encapsulated in the prosthesis (2).

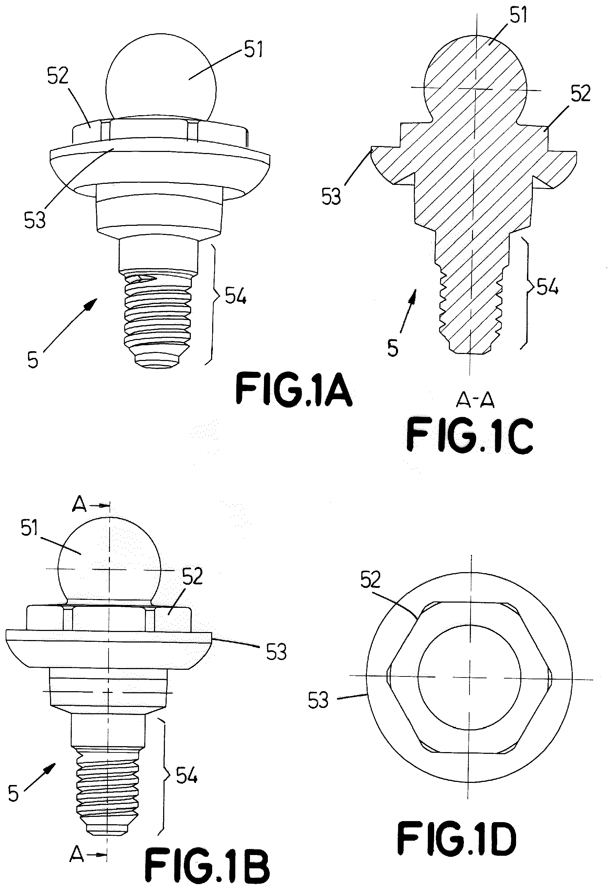

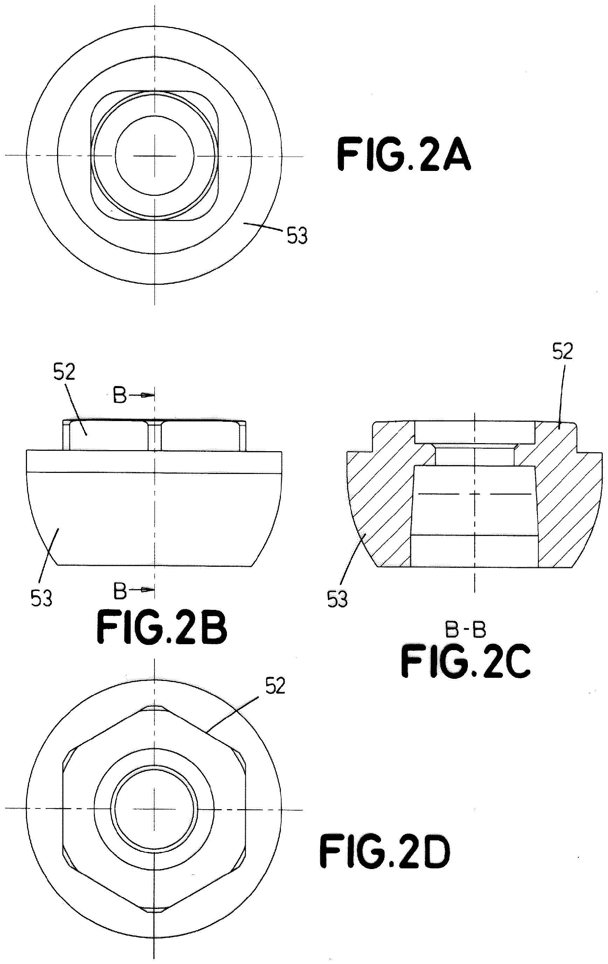

Thus, in this preferred embodiment the fixing device (1) of prosthesis (2) which can be seen in figures 1a-1d also comprises a second piece or connection piece (6) which comprises the retainer (4) and which is designed to act as retention element whilst in any of the possible embodiments of the object of the invention, the interface piece (5) comprises at least four elements:
- A coupling (51) which is found at an upper end of the interface piece (5) and preferably defined by means of the revolution solid which provides an effective prosthetic retention making use of the condition of the typical behaviour of the ball-joint effect of the spheres.
- A polygonal rib (52), preferably a hexagon defined by a flat base whereon the revolution solid, preferably a sphere, is found which will fundamentally allow the tightening of the interface piece (5) to an implant already inserted in its corresponding place and already fixed thereto.
- A base (53) which is observed in detail in figures 2a-2d and which is preferably circular, but which may have any form and volume provided that its upper surface whereon the rib (52) is found is flat, a support base (53) which is located after the rib (52) and just below it on the side opposite that where the revolution solid is found and which allows us by means of total contact with the connection piece (6) a tight closure between both pieces (5,6); this base (53) is where the prosthesis (2) will rest, manufactured by a process chosen according to requirement. This tight closure is what gives the device (1) its indispensable hygienic condition to consider it as fixed prosthesis without the need to remove the prostheses (2) to clean them. A sealing product can be deposited on these circular platforms or bases (53) to occupy possible internal spaces which can be defined in a joint between the pieces (5,6).
- Fixing means (54) preferably defined by an outer thread defined throughout at least a part of said remaining interface piece (5) adapted to screw said interface piece (5) to a head of the implant.

The connection of the prosthesis (2) to the dental prosthesis fixing device (1) is achieved by means of said connection piece (6). Depending on the requirements or prosthetic plan, there are different prosthetic options. Understanding that said solution selected shall be fixed, reversible, aesthetic and compensating for misalignments between implants.

As indicated above, in a preferred embodiment of the device (1) of the invention the prosthesis (2) comprises the retainer (4) encapsulated therein which is coupled to the sphere or revolution solid of the interface piece (5); this embodiment has a reversible device (1) since its removal by traction is possible and its non-existent chimney.

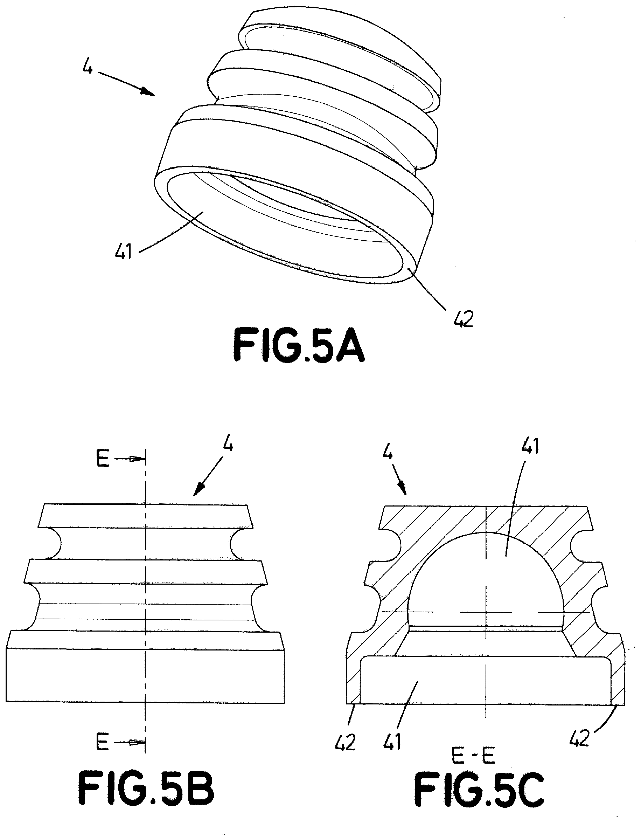

In this embodiment, the connection piece (6) preferably plastic and comprises: the retainer (4) which is performed preferably in plastic and where, as can be observed in figures 5a- 5c, it comprises a hollow inner zone (41) defined by an essentially larger revolution volume and coinciding with that of the revolution solid (3) or sphere (3) of the interface piece (5), inner zone (41) is adapted to adjust with it by means of a play or tightening of the tolerances existing in the revolution solid or sphere of the interface piece (5) and in this inner zone (41). This design is what gives retention to the device (1) allowing different degrees of retention to be achieved by means of the variation in the tolerances. In an alternative embodiment, the degrees of retention can be defined or complemented by means of the selection of the material of the retainer (4), more specifically by the material which defines, at least partially, the inner zone (41) in its interior. The retainer (4) comprises in its lower part a flat peripheral surface (42) which is adapted to be coupled in total contact on the base (53) of the interface piece (5). To do this, the retainer (4) has a size and form which essentially coincide, at least as regards its peripheral surface and/or the inner zone (41) thereof, with those of the revolution solid or sphere of the interface piece (5).

In an even more alternative embodiment of the object of the invention, a retainer (4) is presented whose morphology is such that this does not come into contact with the base (53), allowing greater angulations. Having a retainer (4) which partially surrounds the revolution solid (3) leaving the lower part of the latter free.

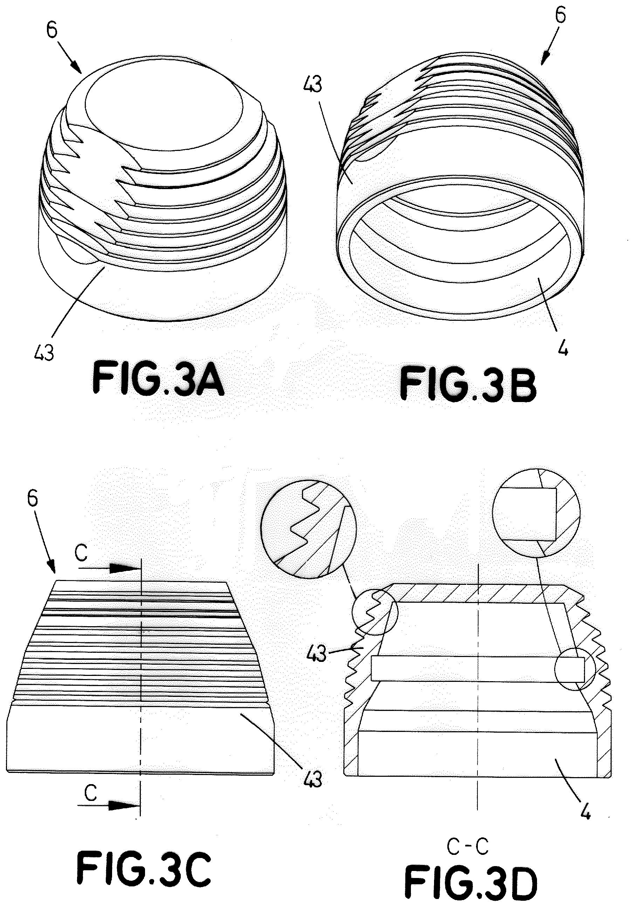

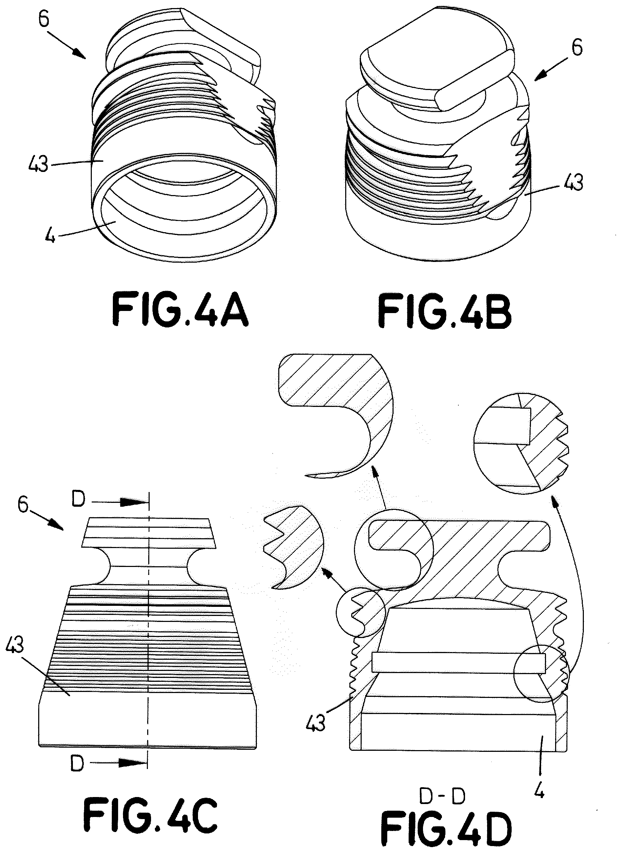

The connection piece (6) comprises a case (43) as shown in figures 3a-3d and 4a-4d, preferably metal, although its manufacturing is also foreseen in plastic materials, which has a form in its inner zone of equal and greater size than that of the retainer (4), a case (43) which is located so that it surrounds at least partially the retainer (4) where an edge of said case (43) is in total contact with at least a perimeter zone of the area of the base (53), therefore what surrounds at least partially the retainer (4), is said case (43) the element which encloses in at least part of its periphery the plastic retainer (4) and which when the coupling is performed with the base (53) of the interface piece (5) a surface of an edge of said case (43) is in total contact with at least a perimeter zone of the area of the base (53) sealing by means of total contact of said base (53) and the case (43) whilst the rest of the surface of the base (53) may be in contact or not with the peripheral surface (42) of the retainer (4), in a preferred embodiment of the object of the invention the sealing and closure between the interface piece (5) and the connection piece (6) is carried out by means of total contact of the base (53) with at least part of the case (43). This allows a very precise adjustment and closure of the prosthetic structures, which defines the device (1) which behaves as a fixed system, since it is not necessary to remove it to sterilize the prosthesis.

In a possible embodiment of the invention it is possible to make use of sealing products on the base (53) to improve the airtightness of the joint of the pieces (5,6).

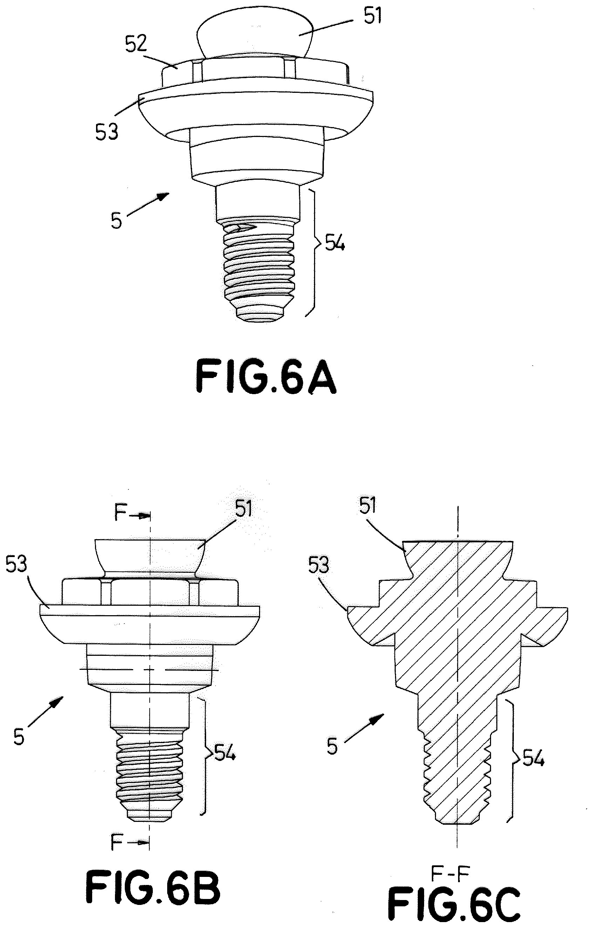

In a possible even more alternative embodiment shown in figures 6a- 6c a saving in materials and machining processes is foreseen on being able to define the inner zone (41) and the revolution solid so that they are different in form and volume, where the revolution solid comprises a volume less than that of the inner zone (41) and is disposed in at least partial contact with said inner zone (41) the contact being defined between the revolution solid and an area above an equator of said inner zone (41). By means of this alternative embodiment the revolution solid may comprise a spherical bushing so that an equator of it essentially coincides with that of the inner zone (41) so that it produces the fixing effect by means of desired pressures, by way of insertion by means of a click. In this embodiment, the revolution solid is defined in truncated form, where the truncation of said revolution solid is preferably carried out in an intermediate zone thereof where a resulting section of the truncation has its maximum possible area.

## Claims

1. Dental prosthesis (2) fixing device (1) comprising:
• an interface piece (5) adapted to be fixed to an implant by means of fixing means (54) defined throughout at least a part of said interface piece (5), where said interface piece (5) in turn comprises:
∘ a coupling (51) which is found at an upper end of the interface piece (5) and preferably defined by a revolution solid,
∘ a polygonal rib (52), defined by a flat base whereon the revolution solid is found, which will fundamentally allow the tightening of the interface piece (5) to the implant already inserted in its corresponding place and already fixed to it,
∘ a preferably circular base (53) located after the rib (52) and just below it on the side opposite that where the revolution solid (3) is found,
• a connection piece (6) associated to the prosthesis (2) and designed to act as retention element on being fixed to the interface piece (5), wherein said connection piece comprises:
∘ a retainer (4), at an apical part of the connection piece (6), and comprising a hollow inner zone (41) defined by an essentially larger revolution volume and coinciding with that of the revolution solid of the interface piece (5), and
∘ a case (43) with a form in its inner zone of equal or greater size than that of the retainer (4), a case (43) which is located so that it surrounds at least partially the retainer (4);
the fixing device (1) being **characterized in that** a apical edge of said case (43) is in total contact with at least a perimeter zone of the area of the base (53).

2. Device (1) according to claim 1, wherein the case (43) is metal.

3. Device (1) according to claim 1, wherein the retainer (4) is plastic.

4. Device according to claim 1, wherein the retainer (4) has a size and form which essentially coincide, at least as regards its peripheral surface and/or the inner zone (41) thereof, with those of the revolution solid of the interface piece (5).

5. Device (1) according to claim 4, wherein the inner zone (41) and the revolution solid which define the coupling (51) coincide in form and volume.

6. Device (1) according to anyone of claims 4 and 5, wherein the inner zone (41) of the retainer has a portion which rests in contact upon the perimeter zone of the base (53).

7. Device (1) according to claim 1 wherein the inner zone (41) and the coupling (51) defined by the revolution solid are different in form and volume, where the revolution solid comprises a volume less than that of the inner zone (41) and is disposed in contact at least partially with said inner zone (41) the contact being defined between the revolution solid and an area above an equator of said inner zone (41).

8. Device (1) according to claim 1 or 5, wherein the revolution solid is hollow.

## Patentansprüche

1. Befestigungsvorrichtung (1) für Zahnprothesen (2), umfassend:
• ein Schnittstellenteil (5), ausgelegt, um an einem Implantat durch Befestigungsmittel (54) befestigt zu werden, definiert in mindestens einem Teil des Schnittstellenteils (5), wobei das Schnittstellenteil (5) wiederum Folgendes umfasst:
o eine Kopplung (51), die sich an einem oberen Ende des Schnittstellenteils (5) befindet und vorzugsweise durch einen Drehkörper definiert ist,
o eine polygonale Rippe (52), definiert durch eine flache Basis, auf der sich der Drehkörper befindet, die grundsätzlich die Befestigung des Schnittstellenteils (5) an dem Implantat erlauben wird, das bereits an der entsprechenden Stelle eingefügt ist und bereits daran befestigt ist,
o eine vorzugsweise kreisförmige Basis (53), die sich hinter der Rippe (52) und direkt darunter auf der Gegenseite befindet, wo sich der Drehkörper (3) befindet,
• ein Verbindungsstück (6), das mit der Prothese (2) verbunden ist und gestaltet ist, um als Rückhalteelement bei Verbinden mit dem Schnittstellenteil (5) zu wirken, wobei das Verbindungsstück Folgendes umfasst:
∘ eine Halterung (4) an einem apikalen Teil des Verbindungsstücks (6), und
umfassend einen hohlen inneren Bereich (41), der durch ein wesentlich größeres Drehvolumen definiert ist und mit dem des Drehkörpers des Schnittstellenteils (5) übereinstimmt, und
∘ ein Gehäuse (43) mit einer Form in ihrem inneren Bereich mit der gleichen oder größeren Größe als die der Halterung (4), wobei das Gehäuse (43) so angeordnet ist, dass es mindestens teilweise die Halterung (4) umgibt;
wobei die Befestigungsvorrichtung (1) **dadurch gekennzeichnet ist, dass** ein apikaler Rand des Gehäuses (43) in einem Gesamtkontakt mit mindestens einem Umfangsbereich der Fläche der Basis (53) ist.

2. Vorrichtung (1) nach Anspruch 1, wobei das Gehäuse (43) aus Metall ist.

3. Vorrichtung (1) nach Anspruch 1, wobei die Halterung (4) aus Kunststoff ist.

4. Vorrichtung nach Anspruch 1, wobei die Halterung (4) eine Größe und Form hat, die im Wesentlichen, zumindest bezüglich ihrer Umfangsfläche und/oder des inneren Bereichs (41) davon, mit denen des Drehkörpers des Schnittstellenteils (5) übereinstimmen.

5. Vorrichtung (1) nach Anspruch 4, wobei der innere Bereich (41) und der Drehkörper, die die Kopplung (51) definieren, in Form und Volumen übereinstimmen.

6. Vorrichtung (1) nach einem der Ansprüche 4 und 5, wobei der innere Bereich (41) der Halterung einen Teil hat, der in Kontakt mit dem Umfangsbereich der Basis (53) bleibt.

7. Vorrichtung (1) nach Anspruch 1, wobei sich der innere Bereich (41) und die Kopplung (51), die durch den Drehkörper definiert sind, bezüglich Form und Volumen unterscheiden, wobei der Drehkörper ein Volumen umfasst, das geringer als das des inneren Bereichs (41) ist und mindestens teilweise in Kontakt mit dem inneren Bereich (41) ist, wobei der Kontakt zwischen dem Drehkörper und einer Fläche über einem Äquator des inneren Bereichs (41) definiert ist.

8. Vorrichtung (1) nach Anspruch 1 oder 5, wobei der Drehkörper hohl ist.

## Revendications

1. Dispositif de fixation (1) de prothèse dentaire (2) comprenant :
• une pièce d'interface (5) adaptée pour être fixée à un implant par des moyens de fixation (54) définis au long d'au moins une partie de ladite pièce d'interface (5), où ladite pièce d'interface (5) comprend à son tour :
∘ un accouplement (51) qui se trouve à une extrémité supérieure de la pièce d'interface (5) et défini de préférence par un solide de révolution,
∘ une nervure polygonale (52), définie par une base plate sur laquelle se trouve le solide de révolution, qui permettra fondamentalement le serrage de la pièce d'interface (5) à l'implant déjà inséré à son emplacement correspondant et déjà fixé à celui-ci,
∘ une base (53) de préférence circulaire située après la nervure (52) et juste en dessous de celle-ci sur la face opposée où se trouve le solide de révolution (3),
• une pièce de jonction (6) associée à la prothèse (2) et destinée à agir comme élément de rétention en étant fixée à la pièce d'interface (5), dans laquelle ladite pièce de jonction comprend :
∘ un élément de retenue (4), sur une partie apicale de la pièce de jonction (6), et
comprenant une zone intérieure creuse (41) définie par un volume de révolution essentiellement plus grand et qui coïncide avec celui du solide de révolution de la pièce d'interface (5), et
∘ un boîtier (43) dont la forme de sa zone intérieure est de taille égale ou supérieure à celle de l'élément de retenue (4), un boîtier (43) situé de sorte qu'il entoure au moins partiellement l'élément de retenue (4) ;
le dispositif de fixation (1) étant **caractérisé en ce qu'**un bord apical dudit boîtier (43) est en contact total avec au moins une zone périphérique de la surface de la base (53).

2. Dispositif (1) selon la revendication 1, dans lequel le boîtier (43) est métallique.

3. Dispositif (1) selon la revendication 1, dans lequel l'élément de retenue (4) est en plastique.

4. Dispositif selon la revendication 1, dans lequel l'élément de retenue (4) a une taille et une forme qui coïncident essentiellement, du moins concernant sa surface périphérique et/ou la zone intérieure (41) de celui-ci, avec celles du solide de révolution de la pièce d'interface (5).

5. Dispositif (1) selon la revendication 4, dans lequel la zone intérieure (41) et le solide de révolution qui définissent l'accouplement (51) coïncident en forme et en volume.

6. Dispositif (1) selon l'une quelconque des revendications 4 et 5, dans lequel la zone intérieure (41) de l'élément de retenue a une partie qui repose en contact avec la zone périphérique de la base (53).

7. Dispositif (1) selon la revendication 1 dans lequel la zone intérieure (41) et l'accouplement (51) défini par le solide de révolution diffèrent en forme et en volume, où le solide de révolution comprend un volume moins important que celui de la zone intérieure (41) et est disposé en contact au moins partiellement avec ladite zone intérieure (41) le contact étant défini entre le solide de révolution et une surface au-dessus d'un équateur de ladite zone intérieure (41).

8. Dispositif (1) selon la revendication 1 ou 5, dans lequel le solide de révolution est creux.
